Europäisches Patentamt

European Patent Office

Office européen des brevets

(11) Veröffentlichungsnummer: **0 188 684 B1**

## EUROPÄISCHE PATENTSCHRIFT

(45) Veröffentlichungstag der Patentschrift: **29.01.92**

(21) Anmeldenummer: **85114398.2**

(22) Anmeldetag: **13.11.85**

(51) Int. Cl.⁵: **F41G 1/38, G02B 27/32**

(54) **Freitragende Zielmarke, insbesondere für optische Zieleinrichtungen.**

(30) Priorität: **28.11.84 DE 3443322**
**29.10.85 DE 3538419**

(43) Veröffentlichungstag der Anmeldung:
**30.07.86 Patentblatt 86/31**

(45) Bekanntmachung des Hinweises auf die
Patenterteilung:
**29.01.92 Patentblatt 92/05**

(84) Benannte Vertragsstaaten:
**DE FR GB IT**

(56) Entgegenhaltungen:
**DE-A- 3 144 240**
**DE-B- 1 915 467**
**US-A- 2 909 838**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Kraus, Heinz**
**Traunring 74e**
**W-8225 Traunreut(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Zielmarke gemäß dem Oberbegriff des Anspruchs 1.

Derartige Zielmarken werden beispielsweise in Zielfernrohren von Schußwaffen verwendet.

Bei einer derartigen optischen Zieleinrichtung wird der Zielpunkt dieser Zieleinrichtung durch die besagte Zielmarke gebildet, die in einer der optischen Brennebenen innerhalb der Zieleinrichtung angeordnet ist. Diese Zielmarke kann vielfältige Formen aufweisen, wie beispielsweise die eines Punktes, eines Balkens oder in der häufigsten Form eines Fadenkreuzes.

In der DE-OS 19 19 542 ist ein Zielfernrohr beschrieben, dessen Zielmarke auf einer Strichplatte angeordnet ist. Diese Strichplatte kann Lichtverluste und Kontrastminderungen im Zielfernrohr durch Grenzflächenreflexionen und durch Partikelverschmutzungen hervorrufen. Zudem ist die Zielmarke der Massenbeschleunigung der Strichplatte durch den Rückstoß der Schußwaffe ausgesetzt.

Ferner sind aus der US-PS 2 949 816 und aus der US-PS 3 229 370 Zielmarken bekannt, die keines Trägersubstrats in Form einer Strichplatte bedürfen. Diese Zielmarken bestehen aus gekreuzten Drähten, die innerhalb eines Trägerrings aufgespannt sind. Diese Drähte sind aber einer Bruchgefahr durch den Rückstoß der Schußwaffe ausgesetzt.

Zur Minderung dieser Bruchgefahr wird in der DE-AS 19 15 467 eine Zielmarke für optische Zieleinrichtungen vorgeschlagen, bei der gekreuzte Bänder innerhalb eines Trägerrings aufgespannt sind. Außerhalb des Kreuzungsbereiches sind diese Bänder mit ihrer Ebene senkrecht zur optischen Achse der Zieleinrichtung und im Kreuzungsbereich durch Verdrehung um 90° mit ihrer Ebene parallel zur optischen Achse angeordnet. Diese Anordnung weist aber den Nachteil auf, daß die sich mit ihren Schmalseiten kreuzenden Bänder sich nicht mehr gemeinsam in der Brennebene der Zieleinrichtung befinden, so daß die schon bei gekreuzten Drähten auftretende Zentrumsparallaxe weiter vergrößert wird.

In der DE-OS 31 44 240 wird in der Beschreibungseinleitung die Herstellung einer einstückigen Zielmarke auf photolithographischem Wege durch chemische Ätzung beschrieben, die aus einem innerhalb eines Trägerrings angeordneten Fadenkreuz besteht. Aus Festigkeitsgründen durch die mechanische Beanspruchung infolge des Rückstoßes der Schußwaffe darf die Dicke dieser aus einer Metallschicht hergestellten Zielmarke einen bestimmten Betrag nicht unterschreiten. Bei dieser Schichtdicke der einstückigen Zielmarke lassen sich bei der chemischen Ätzung aber keine scharfen Kreuzungsecken herstellen, sondern die Kreuzungsecken sind mit einem bestimmten Rundungsradius abgerundet, der in etwa der Schichtdicke der Zielmarke entspricht. Diese Abrundungen der Kreuzungspunkte der Zielmarke beeinträchtigen aber die Schaffung eines deutlichen Zielpunktes. Zur Vermeidung dieses Nachteils wird eine Zielmarke aus zwei identischen Teilen vorgeschlagen, bei der jedes Teil aus einem Trägerring mit lediglich einem Fadenteil besteht. Jeweils zwei dieser identischen Teile werden um 90° zueinander verdreht, übereinander unter Zuhilfenahme von Justiermitteln angeordnet und miteinander verklebt. Diese Zielmarke weist zwar exakt scharfe ungerundete Kreuzungsecken auf, erfordert aber bei der Herstellung einen erhöhten Montageaufwand unter Verwendung von Justiermitteln und ist nicht frei von einer Zentrumsparallaxe.

Aus der US-PS 2,909,838 ist noch eine freitragende Zielmarke bekannt, bei der ein Fadenkreuzteil mit gekreuzten Drähten an einem umlaufenden Trägerteil in Form eines Hohlzylinders angeordnet ist. Die gekreuzten Drähte sind jeweils mit einem Ende an der Außenfläche des Hohlzylinders direkt befestigt und mit dem anderen Ende über eine Feder mit dieser Außenfläche verbunden. Die beiden gekreuzten Drähte verlaufen diagonal über den Rand des Hohlzylinders und werden durch Einschnitte im Rand gegen ein Verrutschen fixiert.

Der Erfindung liegt die Aufgabe zugrunde, eine freitragende Zielmarke der aus US-PS 2 909 838 bekannten Gattung anzugeben, die mit scharfen Kreuzungsecken ausgebildet ist und eine ausreichende mechanische Festigkeit aufweist.

Diese Aufgabe wird erfindungsgemäß durch die kennzeichnenden Merkmale des Anspruches 1 gelöst.

Die mit der Erfindung erzielten Vorteile bestehen insbesondere darin, daß bei der vorgeschlagenen freitragenden Zielmarke durch die Verbindung des Fadenkreuzteils mit dem Trägerteil über wenigstens ein Federelement von außen wirkende Kräfte nicht auf das Fadenkreuzteil übertragen werden, so daß das Fadenkreuzteil mit scharfen Kreuzungsecken ausgebildet werden kann, wodurch die Schaffung eines deutlichen Zielpunktes ermöglicht wird. Wenn das Trägerteil auf einem gesonderten umlaufenden Rahmen befestigt ist, der einen gegenüber der gesamten Zielmarke unterschiedlichen thermischen Ausdehnungskoeffizienten aufweist, so werden unterschiedliche, thermisch bedingte Dimensionsänderungen zwischen dem Rahmen und der Zielmarke ebenfalls von den Federelementen ausgeglichen, so daß die mechanische Belastung des Fadenkreuzteils insgesamt gering gehalten wird. Desgleichen wird auch eine bestimmte Vorspannung der Zielmarke durch das Vorsehen der Federelemente kaum verändert; diese Vorspannung bewirkt eine konstante Planlage der Zielmarke in der Brennebene der Zieleinrichtung. Die vorgeschlagene Zielmarke gewährleistet eine mechanische Stabilität des filigranen Fadenkreuzteils mit exakten Kreuzungsecken und eine genaue Planlage in der Brennebene der Zieleinrichtung sowohl bei äußeren Erschütterungen als auch in einem großen Gebrauchstemperaturbereich.

Vorteilhafte Ausbildungen der Erfindung entnimmt man den Unteransprüchen.

Ausführungsbeispiele der Erfindung werden anhand der Zeichnung näher erläutert.

Es zeigen

Figur 1a  eine Draufsicht auf eine Zielmarke und

Figur 1b  eine Schnittdarstellung dieser Zielmarke;

Figur 2  ein einfaches Federelement;

Figur 3  ein mehrfaches Federelement;

Figur 4  ein weiteres mehrfaches Federelement;

Figur 5  ein Federelement mit Gelenken;

Figur 6  eine Zielmarke mit einem Rahmen;

Figur 7a  einen Querschnitt einer Zieleinrichtung mit einer Zielmarke;

Figur 7b  ein Detail einer Spanneinrichtung und

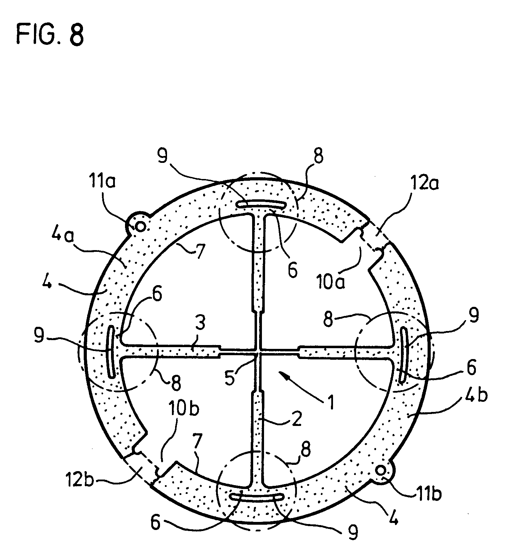

Figur 8  eine Draufsicht auf eine elektrisch heizbare Zielmarke.

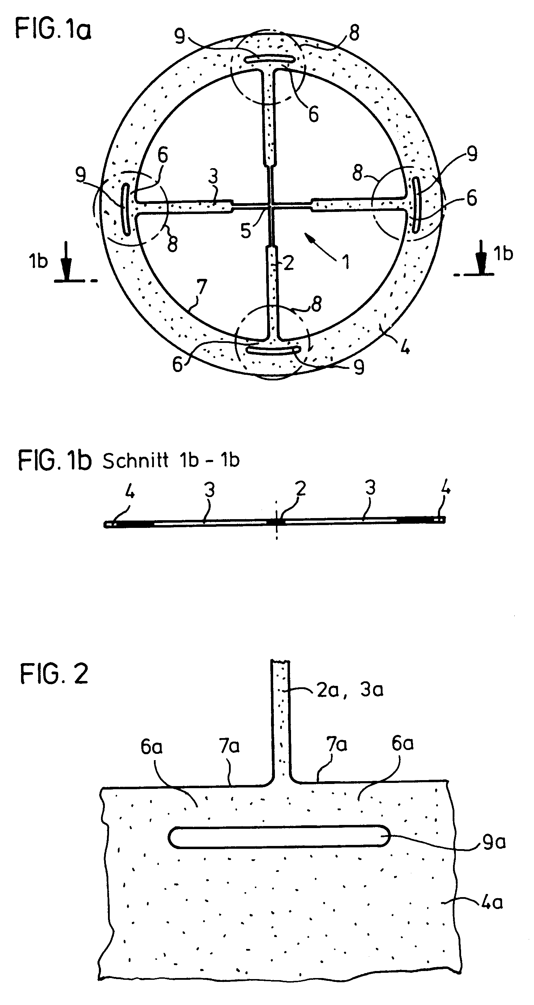

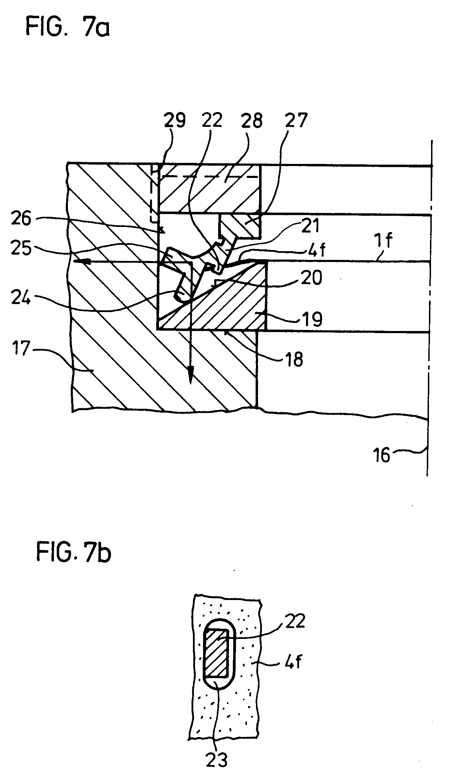

In Figur 1a ist in einer Draufsicht und in Figur 1b in einer Schnittdarstellung eine freitragende Zielmarke gezeigt, die aus einem Fadenkreuzteil 1 mit zwei gekreuzten Stegen 2,3 besteht, die im Inneren eines kreisringförmigen Trägerteils 4 angeordnet und jeweils an ihren Enden mit dem kreisringförmigen Trägerteil 4 verbunden sind. Die gekreuzten Stege 2,3 sind in der Ebene der Zielmarke im Bereich des Kreuzungspunktes 5 dünner als im Bereich des Trägerteils 4 ausgebildet. Die aus dem Fadenkreuzteil 1 und dem Trägerteil 4 bestehende Zielmarke wird einstückig auf photolithographischem Wege mittels chemischer Ätzung beispielsweise aus einer Berylliumbronzeschicht hergestellt, deren Schichtdicke so dünn bemessen ist, daß im Kreuzungspunkt 5 der beiden Stege 2,3 scharfe Kreuzungsecken zur Schaffung eines deutlichen Zielpunktes ausgebildet sind. Eine derartige Zielmarke wird in einer Brennebene einer optischen Zieleinrichtung gemäß Figur 7a angeordnet, wobei der innere Rand 7 des Trägerteils 4 als Gesichtsfeldblende dient.

Eine solche optische Zieleinrichtung wird hauptsächlich bei Schußwaffen eingesetzt, deren Rückstoß auf die starr mit der Schußwaffe verbundene Zieleinrichtung und damit auch auf die Zielmarke übertragen wird. Dieser Rückstoß gefährdet insbesondere den Kreuzungsbereich um den Kreuzungspunkt 5 der Zielmarke, in dem die dünnen Teile der Stege 2,3 den mechanisch schwächsten Teil der Zielmarke bilden, so daß es bei den durch den Rückstoß der Schußwaffe hervorgerufenen Erschütterungen der optischen Zieleinrichtung leicht zu einem Bruch des Fadenkreuzteils 1, insbesondere im Kreuzungsbereich der beiden Stege 2,3 kommen kann.

Zur Vermeidung einer derartigen Bruchgefahr bei der freitragenden Zielmarke wird vorgeschlagen, das Fadenkreuzteil 1 über Federelemente 6 mit dem Trägerteil 4 zu verbinden. In Figur 1 sind vier solcher Federelemente 6 schematisch im Übergangsbereich 8 zwischen den Enden der sich kreuzenden Stege 2, 3 und dem Trägerteil 4 dargestellt.

Nach Figur 2 sind die Stege 2a , 3a mit dem Trägerteil 4a jeweils über ein einfaches Federelement 6a in Form eines Biegebalkens verbunden, der am inneren Rand 7a des Trägerteils 4a durch eine quer und symmetrisch zum Steg 2a, 3a verlaufende längserstreckte Ausnehmung 9a im Trägerteil 4a gebildet wird. Diese Biegebalken 6a ermöglichen eine federnde und stoßgedämpfte Aufhängung der gekreuzten Stege 2a, 3a im Trägerteil 4a, so daß Stoßbelastungen der Zieleinrichtung nicht zu einem mechanischen Bruch der Zielmarke führen.

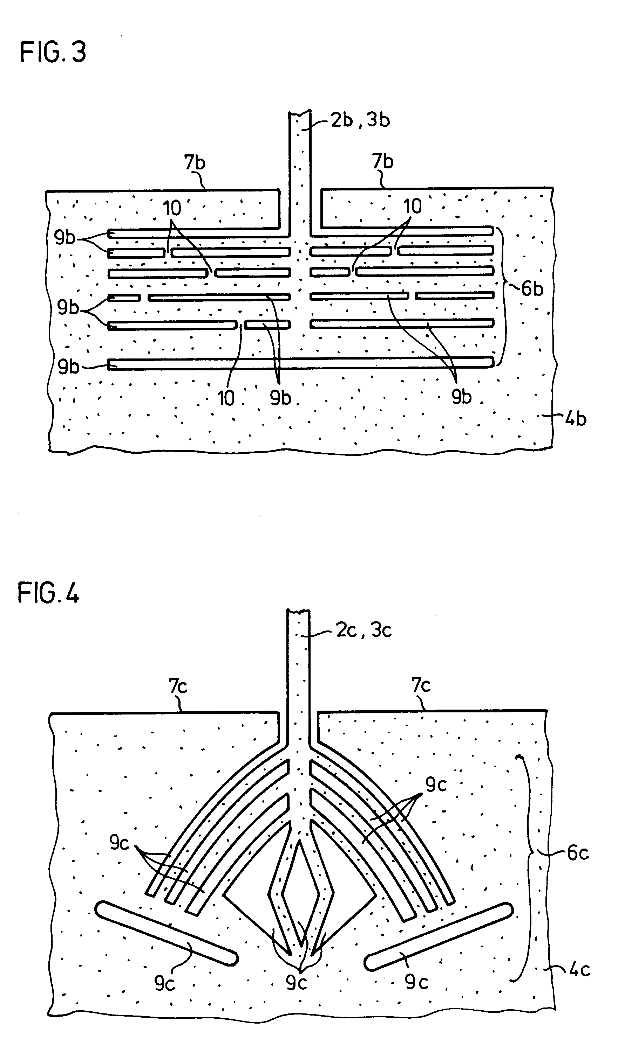

Gemäß Figur 3 sind die Stege 2b, 3b mit dem Trägerteil 4b jeweils über ein mehrfaches Federelement 6b in Form mehrerer parallel verlaufender Biegebalken verbunden, die nahe des inneren Randes 7b des Trägerteils 4b durch zwischen den einzelnen Biegebalken 6b angeordnete längserstreckte Ausnehmungen 9b im Trägerteil 4b gebildet werden. Diese Biegebalken 6b sind quer und symmetrisch zu den Stegen 2b, 3b angeordnet und durch kurze Brücken 10 in den Ausnehmungen 9b miteinander verbunden. Vorzugsweise unterliegen die Breiten der Biegebalken 6b und die Anordnung der Brücken 10 in diesem Biegebalkenparallelogramm einer Zufallsverteilung. Die Anordnung der Figur 3 weist eine gegenüber der Anordnung nach Figur 2 höhere Stoßabsorption auf, da dieses Federelement 6b zusätzlich als Dämpfungselement ausgebildet ist.

In Figur 4 sind die Stege 2c, 3c mit dem Trägerteil 4c jeweils über ein weiteres mehrfaches Federelement 6c verbunden, das in der Nähe des inneren Randes 7c des Trägerteils 4c symmetrisch zu den Stegen 2c, 3c angeordnet ist und eine Anzahl von im wesentlichen schräg zu den Stegen 2c, 3c verlaufenden, unterschiedlich ausgebildeten Biegebalken aufweist, die durch entsprechend geformte Ausnehmungen 9c im Trägerteil 4c gebildet werden; auch dieses Federelement 6c besitzt zusätzlich die Eigenschaften eines Dämpfungselementes.

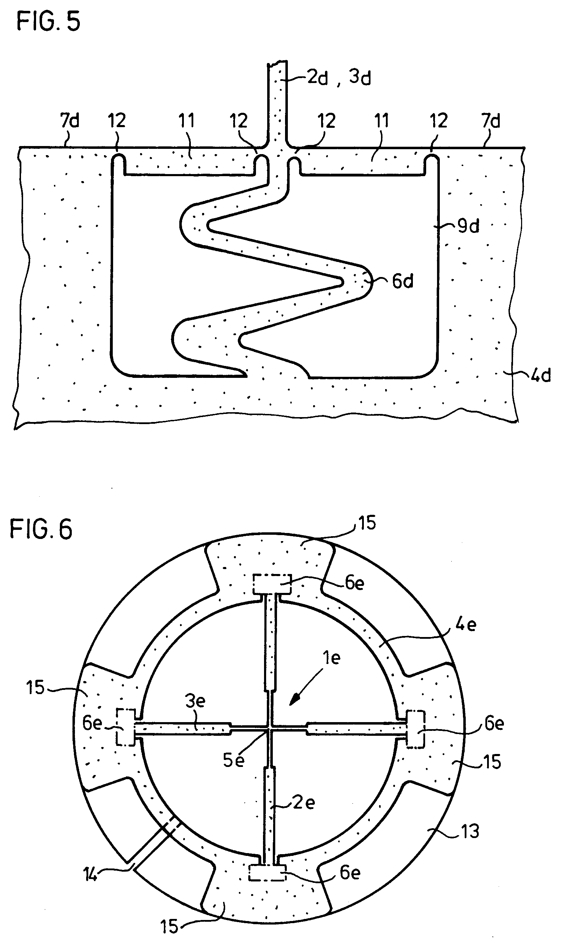

In Figur 5 sind die Stege 2d, 3d mit dem Trägerteil 4d jeweils über ein Federelement 6d in Form einer in Richtung der Stege 2d, 3d verlaufenden mäanderförmigen Feder verbunden, die nahe des inneren Randes 7d des Trägerteils 4d in einer rechteckigen Ausnehmung 9d im Trägerteil 4d gebildet ist. Zwischen dem inneren Rand 7d des Trägerteils 4d und der rechteckigen Ausnehmung 9d im Trägerteil 4d sind zwei Querlenker 11 ausgebildet, die senkrecht zu den Stegen 2d, 3d die Verbindungsstelle der Stege 2d, 3d mit der mäanderförmigen Feder 6d mit dem Trägerteil 4d verbinden. Die beiden symmetrisch zu den Stegen 2d, 3d verlaufenden Querlenker 11 weisen an ihren Enden jeweils ein Gelenk 12 in Form einer Querschnittsverjüngung auf. Diese beiden mit Gelenken 12 versehenen Querlenker 11 dienen zur Führung und Lagestabilisierung der Stege 2d, 3d bei auftretenden Erschütterungen.

In den Figuren 2-5 stellen die Federelemente 6 integrierende Bestandteile des Trägerteils 4 dar und bilden mitsamt dem Trägerteil 4 und den Stegen 2,3 die einstückige Zielmarke, die auf photolithographischem Wege außer durch chemische Ätzung auch durch galvanoplastische Auftragung von Material hergestellt werden kann.

In Figur 6 ist eine Zielmarke mit einem Fadenkreuzteil 1e aus zwei sich kreuzenden Stegen 2e, 3e dargestellt, die über in einem Trägerteil 4e integrierte Federelemente 6e mit diesem Trägerteil 4e verbunden sind. Das Trägerteil 4e ist auf einem Rahmen 13 befestigt, der zur Montage der Zielmarke in einer nicht gezeigten optischen Zieleinrichtung dient und einen radialen Schlitz 14 mit einer bestimmten Breite aufweist. Zur Montage des Trägerteils 4e der Zielmarke auf dem Rahmen 13 wird der federnde Rahmen 13 in eine nicht gezeigte Durchmesserlehre eingebracht und auf einen bestimmten kleineren Durchmesser zusammengedrückt. Anschließend wird das Trägerteil 4e mit vier im Bereich der gekreuzten Stege 2e, 3e vorgesehenen Befestigungsflächen 15 beispielsweise durch Kleben oder Schweißen auf dem Rahmen 13 befestigt; der Rahmen 13 wird sodann aus der Durchmesserlehre entfernt und dehnt sich in etwa wieder auf seinen ursprünglichen Durchmesser aus, so daß die Zielmarke eine bestimmte Vorspannung erhält, die eine exakte Lage des Fadenkreuzteils 1e in der Brennebene der optischen Zieleinrichtung gewährleistet. Die zwischen den Befestigungsflächen 15 liegenden Bereiche des Trägerteils 4e werden zweckmäßigerweise möglichst schmal gehalten und nicht auf dem Rahmen 13 befestigt, um statische Überbestimmungen zu vermeiden.

In Figur 7a ist ein Querschnitt einer optischen Zieleinrichtung in Form eines Zielfernrohres im Ausschnitt dargestellt; dieser Ausschnitt des Zielfernrohres ist nur auf einer Seite seiner optischen Achse 16 dargestellt. In einem Gehäuse 17 dieses Zielfernrohres ist eine radiale Anlagefläche 18 zur Aufnahme eines konischen Auflageringes 19 vorgesehen, dessen konische Auflagefläche 20 nach außen abfällt. Eine Spanneinrichtung 21 greift mit einem Mitnehmer 22 in eine Ausnehmung 23 (Figur 7b) eines Trägerteils 4f einer Zielmarke ein und stützt sich mit einer ersten Schulter 24 auf der konischen Auflagefläche 20 des Auflageringes 19 und mit einer zweiten Schulter 25 an der Innenwandung 26 des Gehäuses 17 des Zielfernrohres zur Begrenzung einer bestimmten Vorspannung der Zielmarke ab. Die Spanneinrichtung 21 wird an einer dritten Schulter 27 von einem Schraubring 28 in einem Innengewinde 29 der Wandung 26 des Gehäuses 17 zur Einstellung dieser bestimmten Vorspannung der Zielmarke beaufschlagt, um eine exakte Lage des Fadenkreuzteils 1f der Zielmarke in der Brennebene des Zielfernrohres zu gewährleisten. Drei weitere derartige Spanneinrichtungen 21 sind im Zielfernrohr in nicht gezeigter Weise zur Erzielung dieser Vorspannung der Zielmarke jeweils um 90° zueinander versetzt im Zielfernrohr vorgesehen und werden vom gleichen Schraubring 28 beaufschlagt.

Der Rahmen 13 nach Figur 6 kann zur Einstellung einer bestimmten Vorspannung der Zielmarke auch aus einer Gedächtnislegierung (Memory-Legierung) bestehen, deren Umwandlungstemperatur außerhalb der Gebrauchstemperatur der Zielmarke liegt.

Die Ausschnitte der Zielmarken nach den Figuren 2-5 stellen den Bereich 8 der Zielmarke nach Figur 1a dar und sind der Einfachheit halber geradlinig dargestellt. Aus den Ausführungsbeispielen der Figuren 2-5 ist ersichtlich, daß die Federkennlinie und der Dämpfungsgrad der Federelemente 6 in weiten Grenzen variiert werden kann, um die Zielmarke den konstruktiven Bedürfnissen und Gebrauchsspezifikationen der optischen Zieleinrichtungen optimal anpassen zu können. Die Strukturgeometrie der Federelemente 6 wird zweckmäßigerweise empirisch an Musterzielmarken ermittelt; es können auch verschiedene Ausbildungen der Federelemente 6 bei einer Zielmarke kombiniert eingesetzt werden.

Die integrierten Federelemente 6 erlauben auch extreme Materialpaarungen von Zielmarke und Rahmen 13, wobei der Rahmen beispielsweise aus Aluminium und die Zielmarke aus Nickel besteht, die am günstigsten durch galvanoplastische Auftragung des Nickels hergestellt wird. Die vorgeschlagene Zielmarke gewährleistet bei solchen Materialpaarungen auch bei extremen Gebrauchstemperaturen eine Planlagenkonstanz in der Brennebene der Zieleinrichtung mit annähernd konstanter Vorspannung, die gebrauchsspezifisch vorgegeben werden kann, ohne in die Nähe der Bruchbelastung zu kommen. Die vorgeschlagene Zielmarke kann verfahrenstechnisch ohne zusätzlichen Aufwand hergestellt werden, wobei die Geometrie der Federelemente bereits in der Maskenvorlage zur photolithographischen Herstellung der Zielmarke integriert ist, so daß sich eine einfach aufgebaute und preisgünstige Zielmarke ergibt; es wird somit eine kostengünstige Serienherstellung der Zielmarken mit engen Fertigungstoleranzen ermöglicht.

Zur Verwendung dieser freitragenden Zielmarke im infraroten Spektralbereich wird vorgeschlagen, das Fadenkreuzteil 1 elektrisch zu heizen. Zu diesem Zweck besteht das Trägerteil 4 aus einer ersten Trägerteilhälfte 4a und aus einer zweiten Trägerteilhälfte 4b, die galvanisch durch zwei Schlitze 10a, 10b voneinander getrennt sind. Die beiden Trägerteilhälften 4a, 4b weisen jeweils einen elektrischen Anschlußkontakt 11a, 11b zum Anschließen einer nicht dargestellten elektrischen Spannungsversorgung auf. Da bei dieser Zielmarke die Stege 2,3 des Fadenkreuzteils 1 im Bereich des Kreuzungspunktes 5 die geringsten Querschnittsabmessungen besitzen, erfährt das Fadenkreuzteil 1 in diesem Kreuzungspunkt 5 die größte Temperaturerhöhung durch diese elektrische Widerstandsheizung. Bei einem Einsatz dieser freitragenden Zielmarke in einem Wärmebildgerät braucht für einen einwandfreien Kontrast die Temperatur des Fadenkreuzteils 1 im Kreuzungspunkt 5 nur wenige Grade über der Umgebungstemperatur zu liegen. Da das Fadenkreuzteil 1 außerhalb des Kreuzungspunktes 5 sowie die beiden Trägerteilhälften 4a, 4b des Trägerteils 4 gegenüber dem Fadenkreuzteil 1 im Kreuzungspunkt 5 wesentlich größere Querschnittsabmessungen aufweisen, erfahren sie eine dementsprechend geringere Temperaturerhöhung und treten somit im Wärmebild praktisch nicht in Erscheinung. Nur das Fadenkreuzteil 1 im Bereich des Kreuzungspunktes 5 ist als das wesentliche Teil der freitragenden Zielmarke im Wärmebild sichtbar, so daß das Wärmebild durch die übrigen Teile der Zielmarke nicht beeinträchtigt wird.

Die durch die Temperaturerhöhung infolge der resistiven Beheizung eventuell auftretenden thermischen Ausdehnungen der Stege 2,3 des Fadenkreuzteils 1 werden durch die Federelemente 6 kompensiert, die dem Fadenkreuzteil 1 eine bestimmte Vorspannung zur Erzielung einer Planlagenkonstanz in der Brennebene des Wärmebildgerätes verleihen.

Zur einstückigen Herstellung der gesamten Zielmarke aus einem elektrisch leitfähigen Material beispielsweise auf photolithographischem Wege mittels chemischer Ätzung sind die beiden Schlitze 10a, 10b zwischen den beiden Trägerteilhälften 4a, 4b mittels je eines Steges 12a, 12b überbrückt. Nach dem Befestigen des Trägerteils 4 auf einem nicht gezeigten, elektrisch isolierenden Rahmen werden die beiden Stege 12a, 12b zur galvanischen Trennung der beiden Trägerteilhälften 4a, 4b durchgetrennt oder entfernt.

In nicht dargestellter Weise kann das Fadenkreuzteil auch induktiv geheizt werden.

**Patentansprüche**

1. Freitragende Zielmarke, insbesondere für optische Zieleinrichtungen, bei der ein Fadenkreuzteil (1) mit gekreuzten Stegen (2, 3) an einem den Fadenkreuzteil (1) umlaufenden Trägerteil (4) vorgesehen ist, an welchem sich wenigstens ein Federelement (6) zur federnden Aufhängung der gekreuzten Stege (2, 3) befindet, dadurch gekennzeichnet, daß zur Bildung des Federelementes (6) zum federnden und stoßgedämpften Aufhängen des Fadenkreuzteils (1) an den Trägerteil (4) die auf fotolithografischem Wege durch chemische Ätzung oder galvanoplastische Auftragung in Form einer verhältnismäßig dünnen Metallschicht erzeugte einstückige Zielmarke jeweils im Übergangsbereich zwischen dem Trägerteil (4) und den Enden der gekreuzten Stege (2, 3) und direkt im Trägerteil (4) integriert wenigstens eine zum jeweiligen Steg (2, 3) symmetrisch angeordnete Ausnehmung (9) der Metallschicht aufweist.

2. Zielmarke nach Anspruch 1, dadurch gekennzeichnet, daß das Federelement (6a) aus einem quer zum Steg (2a, 3a) verlaufenden Biegebalken besteht, der von einer längserstreckten Ausnehmung (9a) und dem Innenrand (7a) des Trägerteils (4a) gebildet ist.

3. Zielmarke nach Anspruch 1, dadurch gekennzeichnet, daß das Federelement (6b) aus mehreren quer zum Steg (2b, 3b) verlaufenden Biegebalken besteht, die von längserstreckten Ausnehmungen (9b) gebildet sind.

4. Zielmarke nach Anspruch 1, dadurch gekennzeichnet, daß das Federelement (6c) aus mehreren schräg zum Steg (2c, 3c) verlaufenden Biegebalken besteht, die von entsprechend geformten Ausnehmungen (9c) gebildet sind.

5. Zielmarke nach Anspruch 1, dadurch gekennzeichnet, daß das Federelement (6d) aus einem in Richtung des Steges (2d, 3d) verlaufenden mäanderförmigen Streifen in einer rechteckigen Ausnehmung (9d) besteht und daß der Verbindungspunkt zwischen dem Steg (2d, 3d) und dem mäanderförmigen Streifen mit wenigstens einem Querlenker (11) verbunden ist, der vom Innenrand (7d) des Trägerteils (4d) und der rechteckigen Ausnehmung (9d) gebildet ist und wenigstens ein Gelenk (12) aufweist.

**6.** Zielmarke nach Anspruch 3, dadurch gekennzeichnet, daß die Biegebalken (6d) durch Brükken (10) miteinander verbunden sind.

**7.** Zielmarke nach Anspruch 6, dadurch gekennzeichnet, daß die Breite der Biegebalken (6b) und die Anordnung der Brücken (11) zwischen den Biegebalken (6b) einer Zufallsverteilung unterliegen.

**8.** Zielmarke nach Anspruch 1, dadurch gekennzeichnet, daß das Trägerteil (4e) der Zielmarke auf einem Rahmen (13) mit einer bestimmten Vorspannung befestigt ist.

**9.** Zielmarke nach Anspruch 1, dadurch gekennzeichnet, daß das Trägerteil (4f) der Zielmarke in der optischen Zieleinrichtung von einem Spannelement (21) beaufschlagt ist.

**10.** Zielmarke nach Anspruch 8, dadurch gekennzeichnet, daß der Rahmen (13) zur Einstellung der Vorspannung der Zielmarke einen radialen Schlitz (14) mit einer bestimmten Breite aufweist.

**11.** Zielmarke nach Anspruch 8, dadurch gekennzeichnet, daß der Rahmen (13) zur Einstellung der Vorspannung der Zielmarke aus einer Gedächtnislegierung besteht.

**12.** Zielmarke nach Anspruch 1, dadurch gekennzeichnet, daß das Fadenkreuzteil (1) elektrisch heizbar ist.

**13.** Zielmarke nach Anspruch 12, dadurch gekennzeichnet, daß das Fadenkreuzteil (1) resistiv oder induktiv heizbar ist.

**14.** Zielmarke nach den Ansprüchen 1 und 12, dadurch gekennzeichnet, daß das Fadenkreuzteil (1) und das Trägerteil (4) mitsamt dem Federelement (6) einstückig aus einem elektrisch leitfähigen Material bestehen und daß das Trägerteil (4) durch zwei Schlitze (10a, 10b) in zwei Trägerteilhälften (4a, 4b) aufgeteilt ist, die jeweils einen elektrischen Anschlußkontakt (11a, 11b) aufweisen.

**15.** Zielmarke nach Anspruch 14, dadurch gekennzeichnet, daß die beiden Schlitze (10a, 10b) zwischen den beiden Trägerteilhälften (4a, 4b) durch entfernbare Stege (12a, 12b) überbrückt sind.

**Claims**

**1.** Self-supporting sighting reticule, in particular for optical sighting devices, wherein a cross-hairs part (1) having intersecting bridge elements (2, 3) is provided on a carrier part (4) encircling the cross-hairs part (1) and on which there is at least one spring element (6) for resilient suspension of the intersecting bridge elements (2, 3), characterised in that for forming the spring element (6) for resilient and shock-absorbing suspension of the cross-hairs part (1) on the carrier part (4), the one-piece sighting reticule produced by a photolithographic method by chemical etching or electroplating application in the form of a comparatively thin metal layer has at least one aperture (9) in the metal layer arranged symmetrically in relation to the respective bridge elements (2, 3), in each case in the transitional zone between the carrier part (4) and the ends of the intersecting bridge elements (2, 3) and integrated directly in the carrier part (4).

**2.** Sighting reticule according to claim 1, characterised in that the spring element (6a) consists of a bending bar extending transversely of the bridge element (2a, 3a) and which is formed by a lengthwise extending aperture (9a) and the inner edge (7a) of the carrier part (4a).

**3.** Sighting reticule according to claim 1, characterised in that the spring element (6b) consists of a plurality of bending bars extending transversely of the bridge element (2b, 3b) and which are formed by lengthwise extending apertures (9b).

**4.** Sighting reticule according to claim 1, characterised in that the spring element (6c) consists of a plurality of bending bars extending obliquely with respect to the bridge element (2c, 3c) and which are formed by suitably shaped apertures (9c).

**5.** Sighting reticule according to claim 1, characterised in that the spring element (6d) consists of a serpentine strip extending towards the bridge element (2d, 3d) in a rectangular aperture (9d) and the connecting point between the bridge element (2d, 3d) and the serpentine strip is joined to at least one transverse link (11) which is formed by the inner edge (7d) of the carrier part (4d) and the rectangular aperture (9d) and has at least one joint (12).

**6.** Sighting reticule according to claim 3, characterised in that the bending bars (6b) are connected to one another by bridges (10).

**7.** Sighting reticule according to claim 6, characterised in that the width of the bending bars (6b) and the arrangement of the bridges (10) between the bending bars (6b) are subject to a random distribution.

**8.** Sighting reticule according to claim 1, characterised in that the carrier part (4e) of the reticule is fixed on a frame (13) with a certain initial tension.

**9.** Sighting reticule according to claim 1, characterised in that the carrier part (4f) of the reticule is subjected to pressure in the optical sighting device by a tensioning element (21).

**10.** Sighting reticule according to claim 8, characterised in that the frame (13) has a radial slit (14) with a specific width for adjusting the initial tension of the reticule.

**11.** Sighting reticule according to claim 8, characterised in that the frame (13) consists of a memory alloy for adjusting the initial tension of the reticule.

**12.** Sighting reticule according to claim 1, characterised in that the cross-hairs part (1) is electrically heatable.

**13.** Sighting reticule according to claim 12, characterised in that the cross-hairs part (1) is resistively or inductively heatable.

**14.** Sighting reticule according to claims 1 and 12, characterised in that the cross-hairs part (1) and the carrier part (4) together with the spring element (6) consist in one piece of an electrically conductive material and the carrier part (4) is divided by two slits (10a, 10b) into two halves (4a, 4b), each of which has an electrical connecting contact (11a, 11b).

**15.** Sighting reticule according to claim 14, characterised in that the two slits 10a, 10b between the two halves (4a, 4b) of the carrier part are bridged by removable bars (12a, 12b).

**Revendications**

**1.** Repère de visée monté librement, notamment pour appareils de visée optiques, dans lequel une partie réticule (1) comportant des fils croisés (2, 3) est prévue sur une partie support (4) circulaire, ladite partie support étant munie d'au moins un élément élastique (6) pour la fixation élastique des fils croisés (2, 3), caractérisé en ce que, pour réaliser l'élément élastique (6) assurant la fixation élastique, avec amortissement des chocs, de la partie réticule (1) sur la partie support (4), le repère de visée monobloc, réalisé sous la forme d'une couche de métal relativement fine obtenue par voie photolithographique par attaque chimique ou par dépôt galvanoplastique, présente dans la région de raccordement entre la partie support (4) et les extrémités des fils croisés (2, 3), et directement intégré dans la partie support (4), au moins un évidement (9) dans la couche métallique qui est disposé symétriquement par rapport au fil concerné (2,3).

**2.** Repère de visée selon la revendication 1 caractérisé en ce que l'élément élastique (6a) est constitué d'une barrette de flexion perpendiculaire au fil (2a, 3a), qui est formée par un évidement (9a) allongé et le bord intérieur (7a) du partie support (4a).

**3.** Repère de visée selon la revendication 1 caractérisé en ce que l'élément élastique (6b) est constitué de plusieurs barrettes de flexion perpendiculaires au fil (2b, 3b), qui sont formées par des évidements (9b) allongés.

**4.** Repère de visée selon la revendication 1 caractérisé en ce que l'élément élastique (6c) est constitué de plusieurs barrettes de flexion inclinées par rapport au fil (2c, 3c), qui sont formées par des évidements (9c) adaptés.

**5.** Repère de visée selon la revendication 1 caractérisé en ce que l'élément élastique (6d) est composé d'un ruban formant des méandres en direction du fil (2d, 3d) disposé à l'intérieur d'un évidement rectangulaire (9d) et en ce que le point de raccordement entre le fil (2d, 3d) et le ruban en forme de méandre est relié à au moins une barrette transversale (11), qui est formée par le bord intérieur (7d) de la partie support (4d) et l'évidement (9d) et qui comporte au moins une articulation (12).

**6.** Repère de visée selon la revendication 3 caractérisé en ce que les barrettes de flexion (6d) sont reliées entre elles par des pontages (10).

**7.** Repère de visée selon la revendication 6 caractérisé en ce que la largeur des barrettes de flexion (6b) et la position des pontages (11) entre les barrettes de flexion (6b) sont distribuées de manière aléatoire.

8. Repère de visée selon la revendication 1 caractérisé en ce que la partie support (4e) du repère de visée est fixée sur une monture (13) avec une certaine précontrainte.

9. Repère de visée selon la revendication 1 caractérisé en ce que la partie support (4f) du repère de visée est soumise à l'action d'un élément de serrage (21) dans l'appareil de visée optique.

10. Repère de visée selon la revendication 8 caractérisé en ce que la monture (13) présente une fente radiale (14) de largeur déterminée pour le réglage de la précontrainte du repère de visée.

11. Repère de visée selon la revendication 8 caractérisé en ce que la monture (13) est réalisée en un alliage à mémoire pour le réglage de la précontrainte du repère de visée.

12. Repère de visée selon la revendication 1 caractérisé en ce que le réticule (1) peut être chauffé électriquement.

13. Repère de visée selon la revendication 12 caractérisé en ce que le réticule (1) peut être chauffé par résistance ou par induction.

14. Repère de visée selon les revendications 1 et 12 caractérisé en ce que le réticule (1) et la partie support (4) avec l'élément élastique (6) sont réalisés d'une pièce en un matériau électriquement conducteur et en ce que la partie support (4) est divisée par deux fentes (10a, 10b) en deux moitiés de partie support (4a, 4b) qui comportent chacune un contact de connexion (11a, 11b) électrique.

15. Repère de visée selon la revendication 14 caractérisé en ce que les deux fentes (10a, 10b) entre les deux moitiés de partie support (4a, 4b) sont pontées par des barrettes (12a, 12b) amovibles.

FIG.1a

FIG.1b Schnitt 1b – 1b

FIG. 2

FIG. 3

FIG. 4

FIG. 5

FIG. 6

FIG. 7a

FIG. 7b

FIG. 8